# EUROPEAN PATENT SPECIFICATION

(11) **EP 0 689 123 B1**
(45) Date of publication and mention of the grant of the patent: **08.05.2002**
(21) Application number: 95108968.9
(22) Date of filing: 10.06.1995
(51) Int. Cl.: G06F 3/033

(54) **Graphic data processing apparatus and method of same**
Graphische Datenverarbeitungsanlage und Methode
Appareil de traitement de données graphiques et méthode

(30) Priority: 21.06.1994 JP 13905194
(43) Date of publication of application: 27.12.1995
(73) Proprietor: Wacom Co., Ltd., Saitama, 349-11 (JP)
(72) Inventor: Kobayashi, Takeaki, c/o Wacom Co., Ltd., Kitasaitama-gun, Saitama, 349-11 (JP); Schmitt, Benedikt, c/o Wacom Computer Systems GMBH, D-41460 Neuss (DE)
(74) Representative: Müller, Enno, Dipl.-Ing.

(56) References cited:
- EP-A- 0 635 780
- FR-A- 2 644 911
- US-A- 5 300 927
- IBM TECHNICAL DISCLOSURE BULLETIN, vol. 35, no. 3, 1 August 1992, pages 132-133, XP000326204 "ENGINEERING WORK STATION WITH TWO MICE"

## Description

### BACKGROUND OF THE INVENTION

### 1. Field of the Invention

The present invention relates to a graphic data processing apparatus and a graphic data processing method, more particularly, to a graphic data processing apparatus and a graphic data processing method advantageously applied to various graphic data processing systems associated with CAD (Computer Aided Design) system or DTP (Desk Top Publishing).

### 2. Description of the Prior Art

Conventionally, various images have been formed in such CAD systems through a simple type or graphic data processing device employing a pointing device such as mouse, track ball and the like, or another type graphic data processing device involving a specific coordinate data input device such as tablet or digitizer.

In the latter type graphic data processing device, the information data input through a tablet or digitizer is converted into coordinate data to represent a marker such as cursor on a display screen so that the displayed cursor is operated for selecting and executing various operations and functions belonging to the graphic data processing device. For example, in a typical operation, a cursor is moved to select any one of operation menu or transfer the currently displayed window or operated to select line and shape or to determine first point and finishing point for the image to be formed. In addition to the above, other various operations such as changing in size may be performed through a cursor.

However, since such conventional graphic data processing apparatus is activated in response to only the coordinate data input through mouse or tablet (digitizer) as input instruction data to perform various operations, it provides some problems in actual works. As an example in an operation to rotate and transfer one image, following steps should be sequentially executed one after one;
(1) An object image is selected;
(2) The central point of the object image to be rotated is indicated (indication of first point);
(3) The angle of the object image to be rotated is indicated (indication of second point).

This sequential process is caused by one coordinate data which is input through data input device such as pointing device at one input work. In other words, conventional graphic data processing apparatus has required plural steps to perform one operation such as rotation and transfer operation. This also requires many works and operations to input various data.

Furthermore, in such conventional systems, when one cancel operation is executed, previous steps will be also cancelled. This means that operator must repeat the input works from the first step when he wishes to execute a cancel operation at the final step.

It is easily understood by a skilled artisan that these problems will be disadvantageous factors against operation efficinency in CAD system and image forming system.

From the IBM technical disclosure bulletin, vol. 35, no. 3, August 1, 1992, pages 132 to 133, XP00032-6204 it is known an engineering workstation with two mice wherein one mouse is dedicated to functions previously performed by entry devices as dials and keyboards and the second mouse controlls the workstation software-dependent functions. According to one aspect of the document the availability of the two mice introduces the possibility to create drawings on video display terminal by two-mouse-actions.

Further, from FR 26 44 911 it is known a coordinate reader in which a tablet and two cursor devices are connected electrically to the reader. The coordinate reader transforms position indication signals of both cursor devices on the tablet into X-Y coordinate signals. In addition between the cursor devices and the coordinate reader a switch is electrically disposed for alternatively supplying the position indication signals of the cursor devices to the coordinate reader in response to controll signals generated by a CPU controlled by a timer.

However, especially with regard to an image processing also in these documents no solution is shown against the problems and disadvantageous factors as mentioned above.

### BRIEF SUMMARY OF THE INVENTION

It is therefore a primary object of the present invention to provide a graphic data processing device and method which can reduce confused works in input operation and enhance efficiency of input operation.

To accomplish the above described object, the graphic data processing apparatus according to the present invention is characterized by the following aspects. The graphic data processing apparatus according to the first aspect comprises a plurality of pointing devices (11a, 11b) and a display means,
an input unit (2) including a two dimensional input area (2a) on X, Y plane for inputting coordinate data,
wherein each of said pointing devices (11a, 11b) indicates a specific point on the input area (2a); an indicated point detecting circuit (22) for detecting the point indicated by the pointing device (11a, 11b) as a coordinate data,
a pointing device discriminating circuit (23) for discriminating the coordinate data from the indicated point detecting circuit (22) belonging to the pointing devices (11a, 11b) adding a discriminating data to the coordinate data and transmitting the coordinate data with the discriminating data to an image processing device (12),
an image forming means (5) for forming an image in response to the coordinate data with the discriminated data transmitted from the pointing device discriminating circuit (23), and an image processing means (6) for selecting one of
- translating operation,
- rotation and transfer operation,
- scaling operation,
- scaling and transformation operation to be processed to an object image in accordance with identifying information and coordinate information of the pointing devices (11a, 11b) and executing the selected operation based on a relative relation between the object image defined by first coordinate points (a(x,y), b (x,y)) and a destination of the object image defined by second coordinate points (a' (x,y) ,b' (x, y)), said display means for displaying the image formed by the image forming means (5) and the image processing means (6).

According to a preferred embodiment the above described image processing means defined in the first aspect selects one of operations on the image to be processed; translating operation, rotation and transfer operation, and scaling operation, in response to the coordinate data from the above described point detecting means.

According to the second aspect in the graphic data processing apparatus, the above described image processing means defined in the first aspect selects, as a central point for rotation, one of the points indicated by the pointing devices and preferably executes rotation and transfer operation of the image to be processed in accordance with the angle defined between the selected central point and the other indicated points.

According to the third aspect in the graphic data processing apparatus, the above described image processing means defined in the first aspect selects, as a central point, one of the points indicated by the pointing devices and preferably executes scaling operation of the image to be processed in accordance with the distance defined between the selected central point and the other indicated points.

In the fourth aspect, the graphic data processing method comprises
a step for inputting coordinate data representing a plurality of points indicated by a plurality of pointing devices (11a,11b) into an input unit (2) including a two dimensional input area (2a) on X,Y plane and
a step for detecting the input coordinate data and indentification data which are unique for the pointing devices (11a,11b) through which the coordinate data were inputted; characterized by
a step for executing image processing such as translating, rotation and transfer, scaling, or scaling and transformation to a previously formed image based on a relative relation between an object image to be processed which is defined by first coordinate points (a(x,y),b(x,y)) and a destination of the object image defined by second coordinate points (a'(x,y),b'(x,y)).

Typical operation and function of the graphic data processing apparatus and method according to the first to fourth aspects of the present invention will be described.

In the graphic data processing apparatus according to the first aspect, the point detecting means detects the points indicated by the pointing devices as respective individual coordinate data with the identification data of the pointing devices. Then the image processing means can perform suitable image processing to the object image in accordance with the detected identification data and coordinate data. Thus such configured apparatus allows operator to input the instruction to process the object image while two input operations for first point and second point, as an example, can be simultaneously executed. In other words, the present invention allows for execute input operation in parallel manner rather than sequential and step by step input manner as shown in conventional arts. Therefore the efficiency of input operation will be remarkably improved.

In the graphic data processing apparatus, the image processing means can selectively execute any one of translating operation, rotation and transfer operation, and scaling operation to the object image. This apparatus can reduce the transferred distance of cursor rather than conventional art wherein the first point and second point must be inputed for such image processing operations. This allows operator to be free from difficulties in input operations, and thus the efficiency of input operation will be remarkably improved.

According to the second aspect, in the graphic data processing apparatus, the image processing means selects one of the points indicated by the pointing devices as a central point for rotation, and executes rotation and transfer operation of the object image in accordance with the angle defined between the selected central point and the other indicated points. This allows operator to input both the central point for rotation and the angle of rotation so that the rotation and transer operation can be effectively performed in response to respective input data.

According to the third aspect; in the graphic data processing apparatus, the image processing means selects one of the points indicated by the pointing devices as the central point for scaling operation and executes scaling operation of the image to be processed in accordance with the distance defined between the selected central point and the other indicated points. This allows operator to input both the central point and the distance between the selected point and the other indicated points so that the scaling operation can be effectively performed in response to respective input data.

According to the fourth aspect; in the graphic data processing method, a plurality of points indicated by a plurality of pointing devices are inputed into an input unit including two dimensional input area on an X,Y plane, the input coordinate data and identification data representing unique information for the pointing devices are detected,and a previously formed image is subjected to translating operation, rotation or transfer operation, and scaling operation in response to the detected coordinate data and identification data. That is, the present invention allows to execut various operations with respect to input operation in parallel manner. This reduces the cursor moving time and therefore the efficiency of input operations will be remarkably improved.

These and other objects, features and advantages of the invention will become more apparent upon a reading of the following detailed specification and drawings.

### BRIEF DESCRIPTION OF THE DRAWING

Fig. 1 is a schematic illustration showing whole configuration of a graphic data processing apparatus according to the present invention;
Fig. 2 is a schematic block diagram showing essential structure of a graphic data processing apparatus according to the present invention;
Fig. 3 is a flowchart showing a straight line drawing operation by a graphic data processing apparatus according to the present invention;
Fig. 4 is a flowchart showing a rectangular drawing operation by a graphic data processing apparatus according to the present invention;
Fig. 5 is a flowchart showing a circle drawing operation by a graphic data processing apparatus according to the present invention;
Fig. 6 is a flowchart showing another circle drawing operation instead for Fig. 5 by a graphic data processing apparatus according to the present invention;
Fig. 7 is a flowchart showing an oval drawing operation by a graphic data processing apparatus according to the present invention;
Fig. 8 is a flowchart showing a main operation for rotation and transfer operation and scaling operation by a graphic data processing apparatus according to the present invention;
Fig. 9 is a flowchart showing a reproducing operation of the main operation shown in Fig. 8;
Fig. 10 is a flowchart showing a rotation and transfer operation for a previously formed image;
Fig. 11 is a schematic illustration for explaining the rotation and transfer operation shown in Fig. 10;
Fig. 12 is a flowchart showing a scaling operation for a previously formed image;
Fig. 13 is a schematic illustration for explaining the scaling operation for a circle image shown in Fig. 12;
Fig. 14 is a schematic illustration for explaining the scaling operation for a triangle image shown in Fig. 12;
Fig. 15 is a flowchart showing a transformation operation for a previously formed image;
Fig. 16 is a schematic illustration for explaining the transformation shown in Fig. 15;
Fig. 17 is a schematic illustration for comparing the moved distance until execution of command between a single pointing device and multi pointing devices; and
Fig. 18 is a schematic illustration for comparing the moved distance until execution of command between a single pointing device and multi pointing devices, continued from Fig. 17.

### DETAILED DESCRIPTION OF THE PREFERRED EMBODIMENT

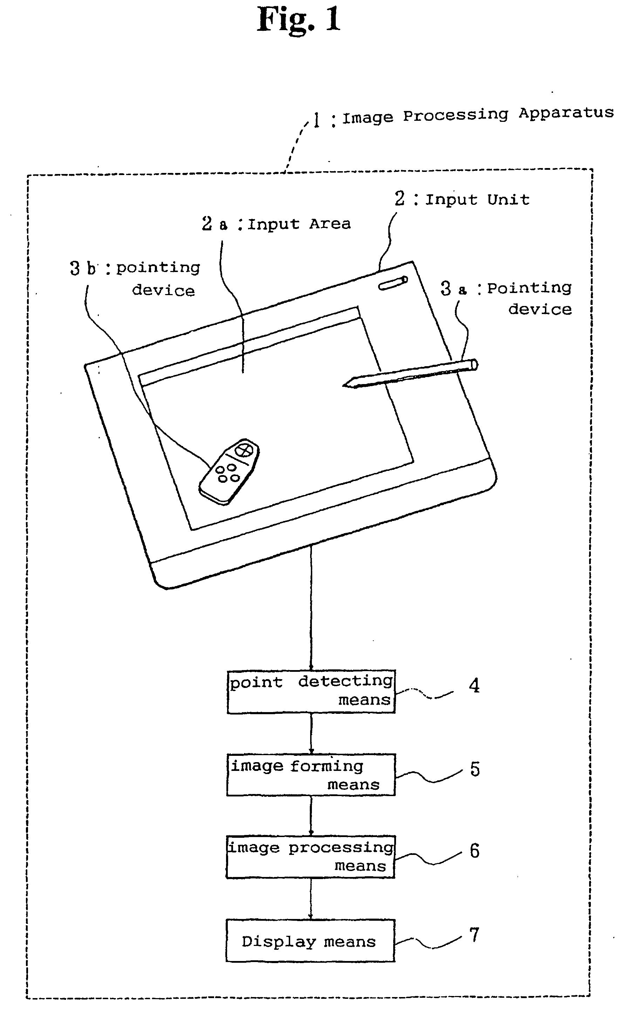

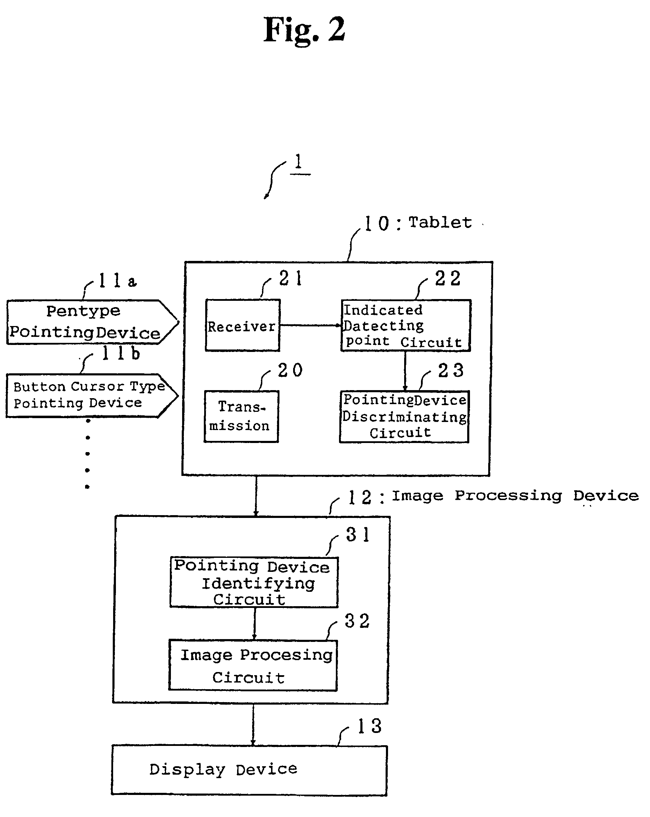

The present invention will be understood by discussing some preferred embodiments in conjuction with the accompanying drawings. Referring to Fig. 2 to Fig. 4, since the same numerals correspond to the same components shown in Fig. 1, the same description will not be repeated.

First, Fig. 2 is a block diagram which shows essential structure of a graphic data processing apparatus as an embodiment according to the present invention.In Fig. 2, a graphic data processing apparatus 1 comprises a tablet 10 including an input unit 2 and a point detecting means 4, a pen type pointing device 11a corresponding to the pointing means 3a and a button cursor type pointing device 11b corresponding to the pointing means 3b in Fig. 1, an image processing device 12 corresponding to the image forming means 5 and the image processing means 6, and a display unit 13 corresponding to the display means 6.

The tablet 10 used in this embodiment is one typical coordinate data input device having an electromagnetic induction system which is comprised of a transmitter 20, receiver 21, indicated point detecting circuit 22 and a pointing device discriminating circuit 23. The transmitter 20 outputs high frequency electromagnetic waves. The receiver 21 includes a plurality of loop antenna groups arranged in X and Y directions to receive signals generated by these pointing devices 11a and 11b. The indicated point detecting circuit 22 outputs coordinate data in response to the received signal by the receiver 21 whose loop antenna group arranged in X and Y directions are scanned. The pointing device discriminating circuit 23 can discriminate the coordinate data from the indicated point detecting circuit 22 belonging to the pointing devices 11a or 11b. The discriminated data is added to the coordinate data.

These pointing devices 11a and 11b both include some coils which use respectively different frequencies to each other to distinguish them.

For example; these pointing devices 11a and 11b always transmit 7-bytes data to the image processing device 12, as shown in Table 1; i.e., 8 bits (D7 to D0) × 7. According to a bit flag P/C in 1 byte data firstly transmitted, the image processing device 12 can identify the coordinate data generated from the pen type pointing device 11a or the button cursor type pointing device 11b.

**Table 1**

| | D 7 | D 6 | D 5 | D 4 | D 3 | D 2 | D 1 | D 0 |
|---|---|---|---|---|---|---|---|---|
| 1 | 1 | RDY | P/C | rcs | F | X s | X15 | X14 |
| 2 | 0 | X13 | X12 | X11 | X10 | X09 | X08 | X07 |
| 3 | 0 | X06 | X05 | X04 | X03 | X02 | X01 | X00 |
| 4 | 0 | F3 | F2 | F1 | F0 | Y s | Y15 | Y14 |
| 5 | 0 | Y13 | Y12 | Y11 | Y10 | Y09 | Y08 | Y07 |
| 6 | 0 | Y06 | Y05 | Y04 | Y03 | Y02 | Y01 | Y00 |
| 7 | 0 | A s | A5 | A4 | A3 | A2 | A1 | A0 |

In Table 1, RDY is a bit flag which represents whether the pointing device is located within an available area or not. "1" represents "available" and "0" represents "not available".

As described above, P/C is a bit flag which represents the coordinate data from the pen type pointing device 11a or the button cursor type pointing device 11b. "1" represents the data from the pen type pointing device 11a and "0" from the button cursor type pointing device 11b. "res" is a reserve bit for future functional expansion. F is a switch bit flag which represents switching situation of the pointing device; i.e., "1" represents switched on situation and "0" represents off situation. F3 to F0 indicate switch numbers switched on when the switch bit flag F indicates "1".

Since the button cursor type pointing device 11b used in this embodiment is provided with four buttons, F1 and F0 are used to indicate which button is switched on. If F3 and F2 are additionally used, the pointing device 11b may be provided with the maximum 16 buttons.

Xs, X15 to X00 are X coordinate values represented by binary digit. Also Ys, Y15 to Y00 are Y coordinate values represented by binary digit. As, A5 to A0 represent pen pressure values within the range of -60 to +60.

The first bit D7 of each byte represents the starting end of the data when the first bit D7 indicates "1", and the continuous data when "0".

The image processing device 12 includes a control unit, not shown, composed of CPU (Central Processing Unit), ROM (Read Only Memory) and RAM (Random Access Memory) which are also not shown. The image processing device 12 further includes a pointing device identifying circuit 31 and an image processing circuit 32 to execute predetermined image processing operations in response to coordinate data from the tablet 10 through the pen type pointing device 11a and the button cursor type pointing device 11b, and then outputs the processed result to a display device 13.

In response to the discriminated result added to the coordinate data from the tablet 10, the pointing device identifying circuit 31 identifies that the coordinate data belongs to which type pointing device 11a or 11b. According to the identified coordinate data, the image processing circuit 32 executes one of image processing operations such as image translating operation, rotation and transfer operation, scaling operation, and so on, which will be referred to later in detail.

The display device 13 is for example a CRT display device having 20 inch screen to display the image data processed by the image processing device 12.

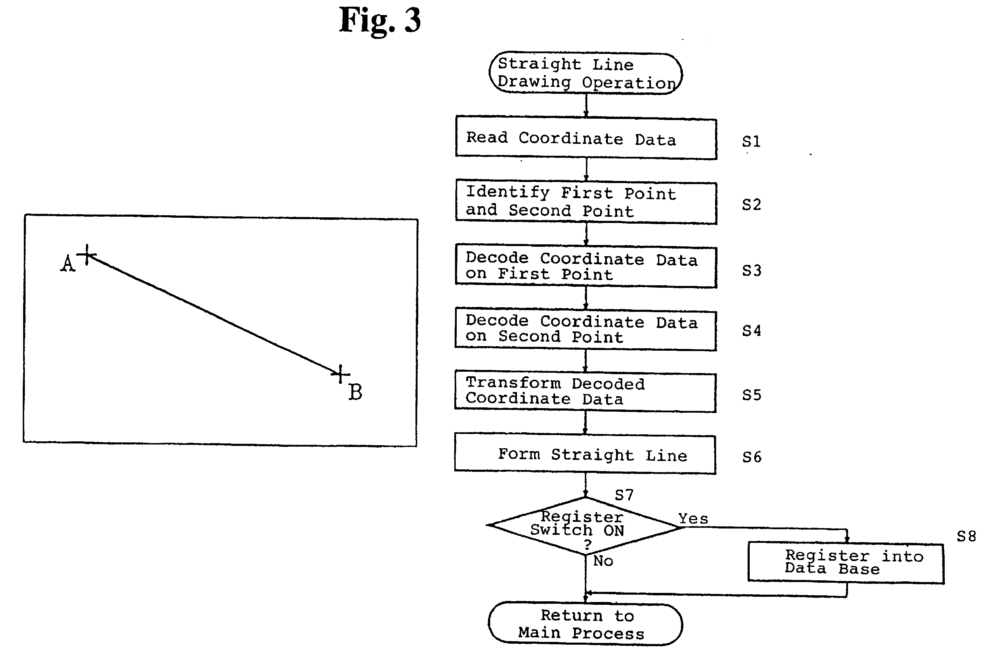

A typical operation of this preferred embodiment of the graphic data processing apparatus 1 according to the present invention will be described. First, the image forming operation of the image processing device 12 will be described in conjuction with Fig. 3 to Fig. 7. In these drawings, a point A represents the coordinate point indicated by the pen type pointing device 11a and a point B represents the coordinate point indicated by the button cursor type pointing device 11b.

Fig. 3 is a flowchart showing one typical operation to form a straight line by the image processing device. The image processing device 12 is operated in accordance with the operation program shown in Fig. 3. At step S1, the coordinate data with respect to a point A indicated by the pen type pointing device 11a and a point B indicated by the button cursor type pointing device 11b are read respectively. At step S2, the point A is identified as a first point and the point B is identified as a second point with reference to the discriminating data; i.e., bit flag P/C, added to each coordinate data. At step S3, the coordinate data on the first point indicated by the pen type pointing device 11a is decoded. At step S4, the coordinate data on the second point indicated by the button cursor type pointing device 11b is decoded. At step S5, the decoded coordinate data is transformed to another coordinate values for display-coordinates in the display device 13. Then, at step S6, a straight line is formed. At step S7, a register switch is checked, whether it is switched on or off. If answer is Yes, the formed image is registered in an image data base at step S8, and then the operation is returned to the main process of the image processing device. If answer is No, the registerating operation is cancelled and this image forming operation is returned to the main process of the image processing device.

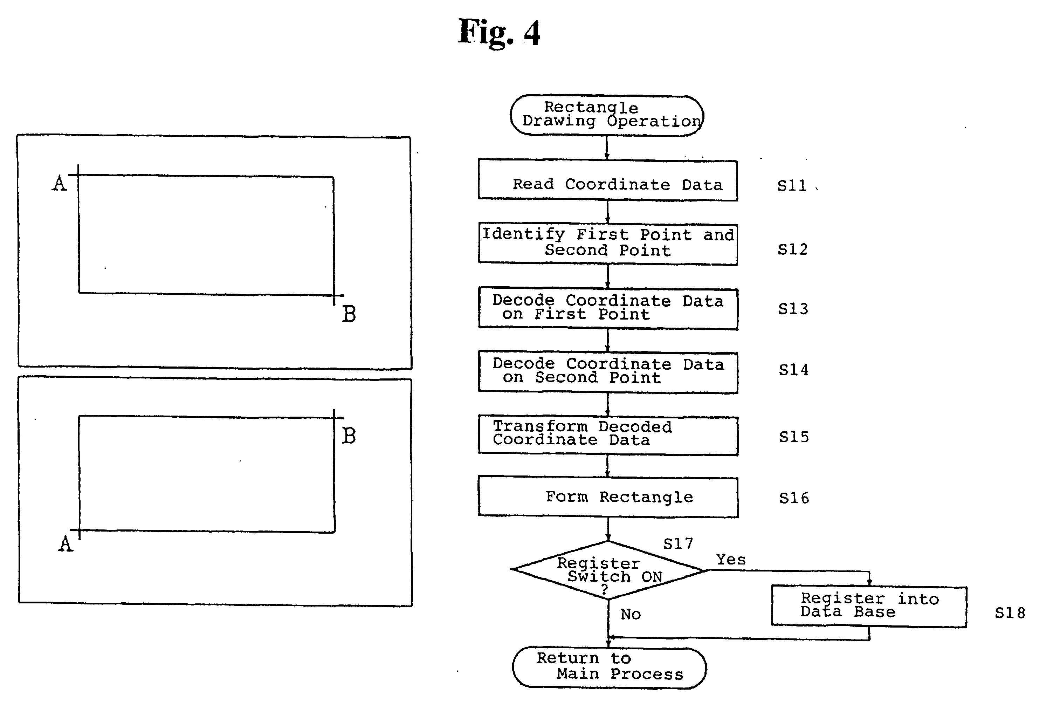

Fig. 4 is also a flowchart showing a rectangle drawing operation by the image processing device 12. At step S11, the coordinate data with respect to a point A indicated by the pen type pointing device 11a and a point B indicated by the button cursor type pointing device 11b are read, respectively. At step S12, one coordinate data caused by the first switched pointing device is identified as the first point and the other caused by the second switched pointing device is identified as the second point. In this embodiment, the point A is identified as a first point and the point B is identified as a second point. In Fig. 4, the point A is located at upper-left or lower-left corner for a rectangle to be formed, and the point B is located at upper-right or lower-right corner for a rectangle to be formed. At step S13, the coordinate data on the first point indicated by the pen type pointing device 11a is decoded. At step S14, the coordinate data on the second point indicated by the button cursor type pointing device 11b is decoded. At step S15, the decoded coordinate data is transformed to another coordinate values for display-coordinates in the display device 13. At step S16, a desired rectangle is formed. At step S17, a register switch is checked, whether it is switched on or off. If answer is Yes, the formed image is registered in an image data base at step S18, and then the operation is returned to the main process of the image processing device. If answer is No, the registerating operation is cancelled and this image forming operation is returned to the main process of the image processing device.

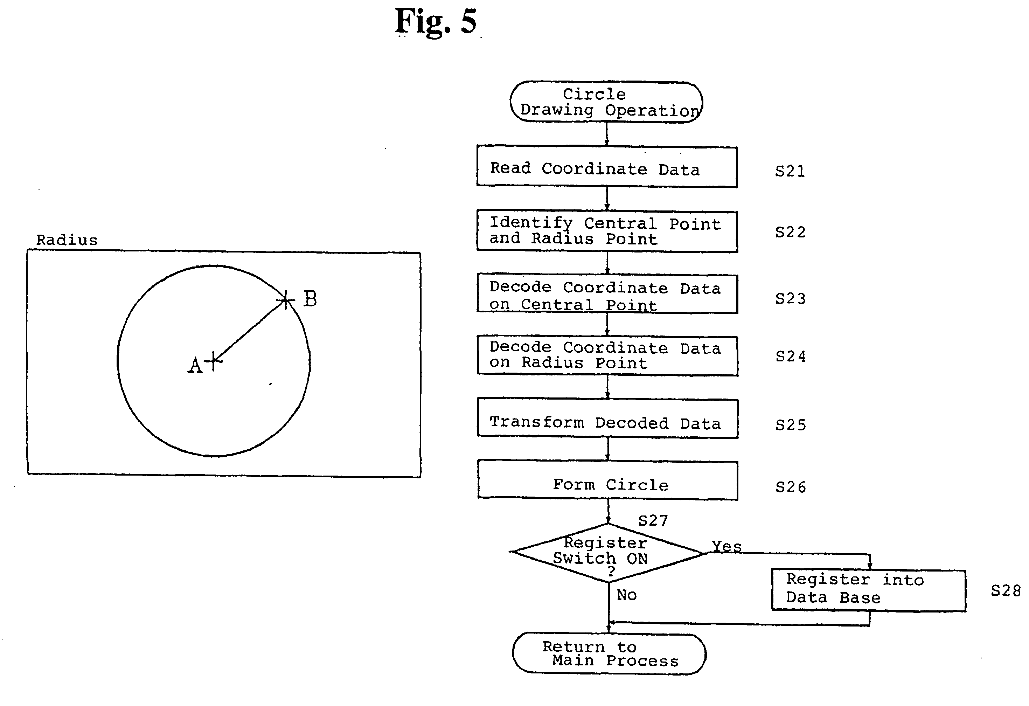

Fig. 5 is a flowchart showing a first example of a circle drawing operation by the image processing device 12. At step S21, the coordinate data with respect to a point A indicated by the pen type pointing device 11a and a point B indicated by the button cursor type pointing device 11b are read, respectively. At step S22, the point A is identified as a central point and the point B is identified as a radius point with reference to the discriminating data;i.e., bit flag P/C, added to each coordinate data. At step S23, the coordinate data on the central point indicated by the pen type pointing device 11a is decoded. At step S24, the coordinate data on the radius point indicated by the button cursor type pointing device 11b is decoded. At step S25, the decoded coordinate data is transformed to other coordinate values for display-coordinates in the display device 13. At step S26, a circle with radius AB about center A is formed.
At step S27, a register switch is checked whether, it is switched on or off. If answer is Yes, the formed image is registered in an image data base at step S28, and then the operation is returned to the main process of the image processing device. If answer is No, the registerating operation is cancelled and this image forming operation is returned to the main process of the image processing device.

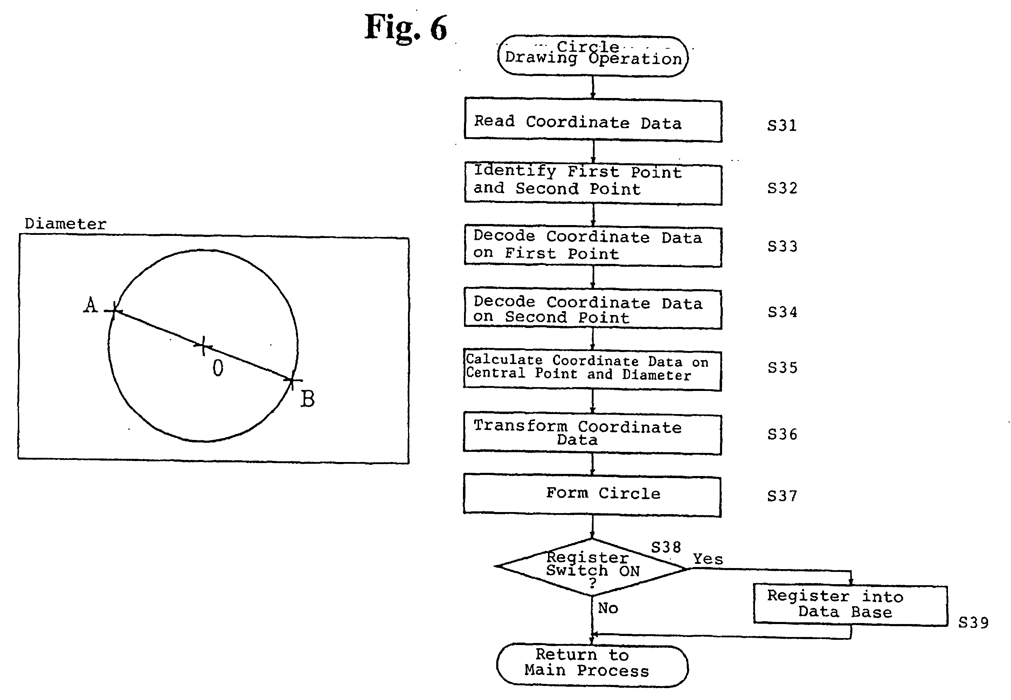

Fig. 6 is a flowchart showing a second example of a circle drawing operation by the image processing device 12. At step S31, the coordinate data with respect to a point A indicated by the pen type pointing device 11a and a point B indicated by the button cursor type pointing device 11b are read respectively. At step S32, the point A is identified as the first point and the point B is identified as the second point with reference to the discriminating data; i.e., bit flag P/C, added to each coordinate data. At step S33, the coordinate data on the first point indicated by the pen type pointing device 11a is decoded. At step S34, the coordinate data on the second point indicated by the button cursor type pointing device 11b is decoded. At step S35, a bisected point O of the line between A and B is defined and the coordinate data of the central point O is calculated. The length of the line between A and B is calculated as the diameter of the circle to be formed. At step 36, the decoded coordinate data is transformed to other coordinate values for display-coordinates in the display device 13. At step S37, a circle with diameter AB about center O is formed. At step S38, a register switch is checked, whether it is switched on or off. If answer is Yes, the formed image is registered in an image data base at step S39, and then the operation is returned to the main process of the image processing device. If answer is No, the registerting operation is cancelled and this image forming operation is returned to the main process of the image processing device.

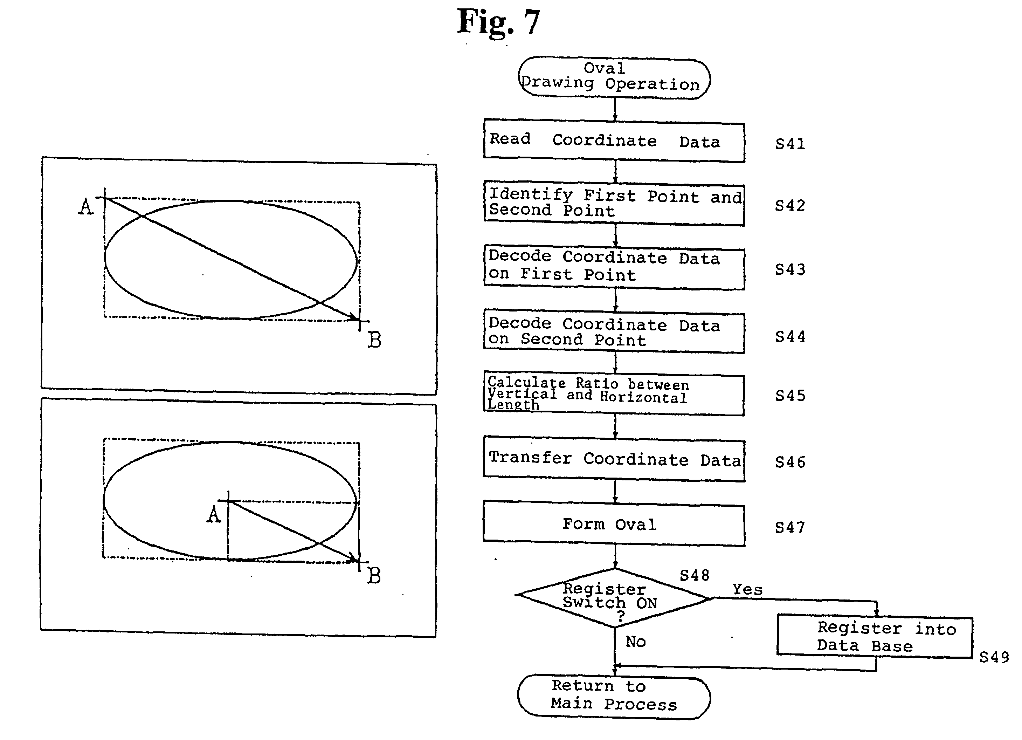

Fig. 7 is a flowchart showing an oval drawing operation by the image processing device 12. At step S41, the coordinate data with respect to a point A indicated by the pen type pointing device 11a and a point B indicated by the button cursor type pointing device 11b are read, respectively. At step S42, the point A is identified as the first point and the point B is identified as the second point with reference to the discriminating data; i.e., bit flag P/C, added to each coordinate data. At step S43, the coordinate data on the first point indicated by the pen type pointing device 11a is decoded. At step S44, the coordinate data on the second point indicated by the button cursor type pointing device 11b is decoded. At step S45, the ratio between vertical length and horizontal length is calculated according to the differences between X coordinate values and Y coordinate values defining the line between A and B. In order to form an oval by indicating the starting and second points, two methods have been well known. That is, one method is to form an oval within a rectangle defined by diagonal points A and B in contact with each side of the rectangle. The other method is to form an oval defined by longer radius and shorter radius resulted from the line between A and B, and the point A as center.

At step 46, the decoded coordinate data is transformed to other coordinate values for display-coordinates in the display device 13. At step S47, an oval about central point A is formed. At step S48, a register switch is checked whether it is switched on or off. If answer is Yes, the formed image is registered in an image data base at step S49, and then the operation is returned to the main process of the image processing device. If answer is No, the registerating operation is cancelled and this image forming operation is returned to the main process of the image processing device.

As described above, various images are formed and registered in the image data base.

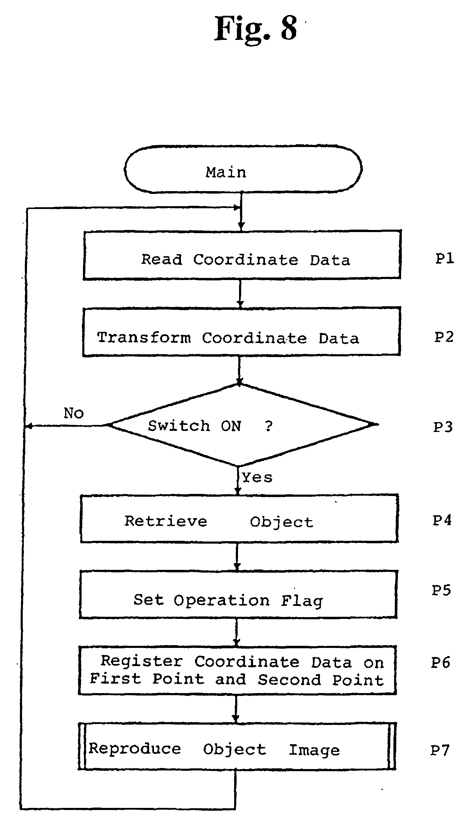

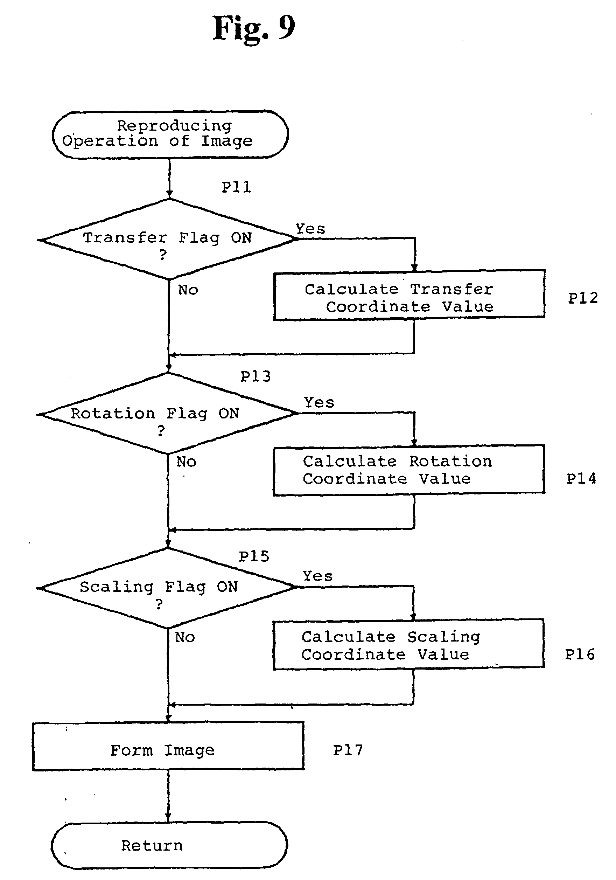

Next, operations for rotation and transfer, and scaling will be described with referring to Fig. 8 and Fig. 9.

Fig. 8 is a flowchart showing a main operation for rotation and transfer operation and scaling operation by the image processing device. At step P1, reading operation for coordinate data is executed. At step P2, the read coordinate data is transformed. At step P3, the switch of the button cursor type pointing device 11b is checked whether it is switched ON or OFF. When it is ON, this program proceeds to step P4 where an objective image is retrieved from the image data base to display the retrieved image on the display device 13. At step P5, an operation flag is set in response to the switch information, for example F1, F0 resulted from the above step P3. In detail, when a number 1 switch of the button cursor type pointing device 11b is switched on, a transfer flag is turned on to set the transfer operation. When a number 2 switch of the button cursor type pointing device 11b is switched on, a transfer flag and a rotation flag are turned on to set the transfer and rotation operation. When a number 3 switch of the button cursor type pointing device 11b is switched on,a transfer flag and a scaling flag are turned on to set the scaling operation. When a number 4 switch of the button cursor type pointing device 11b is switched on, a transfer flag is turned on to set the transfer operation in the same manner as the number 2 switch. However, in this embodiment, when the number 2 switch is switched on, the coordinate data input from the pen type pointing device 11a is used as the center for rotation. On the other hand, when the number 4 switch is switched on,the coordinate data input from the button cursor type pointing device 11b is used as the center for rotation.

Then this operation program progresses to step P6, where coordinate data on the starting and second points for the beginning of rotation and transfer operation or scaling operation are registered. At step P7, the object image is reproduced.

Fig. 9 is a flowchart showing the reproducing operation shown in Fig. 8. This program is executed to check the operation flags set at the step P5 of the flowchart shown in Fig. 8. At step P11, the transfer flag is checked whether it is ON or not. When answer is Yes, the program proceeds to step P12 where coordinate data for transfer operation is calculated and coordinate data or the image to be transferred is also calculated with reference to beginning point of rotation and transfer operation and current coordinate position.

At step P13, the rotation flag is checked, whether it is ON or not. When answer is Yes, the program proceeds to step P14 where coordinate data for rotation and transfer operation is calculated, and angle for rotation is obtained in response to the angle between the first point and the second point at the beginning position and coordinate data on the image to be rotated and transferred is also obtained from the resulting angle.

At step P15, the scaling flag is checked, whether it is ON or not. When answer is Yes, the program proceeds to step P16 where coordinate data for scaling operation is calculated, and coordinate data on the image to be scaled is obtained from the ratio between the distance between the first point and the second point at beginning position as 1 and the distance between the current first point and the current second point.

At step P17, an image is formed in accordance with the coordinate data resulted from the steps P12, P14 and P16 for transfer, rotation and transfer, and scaling operations.

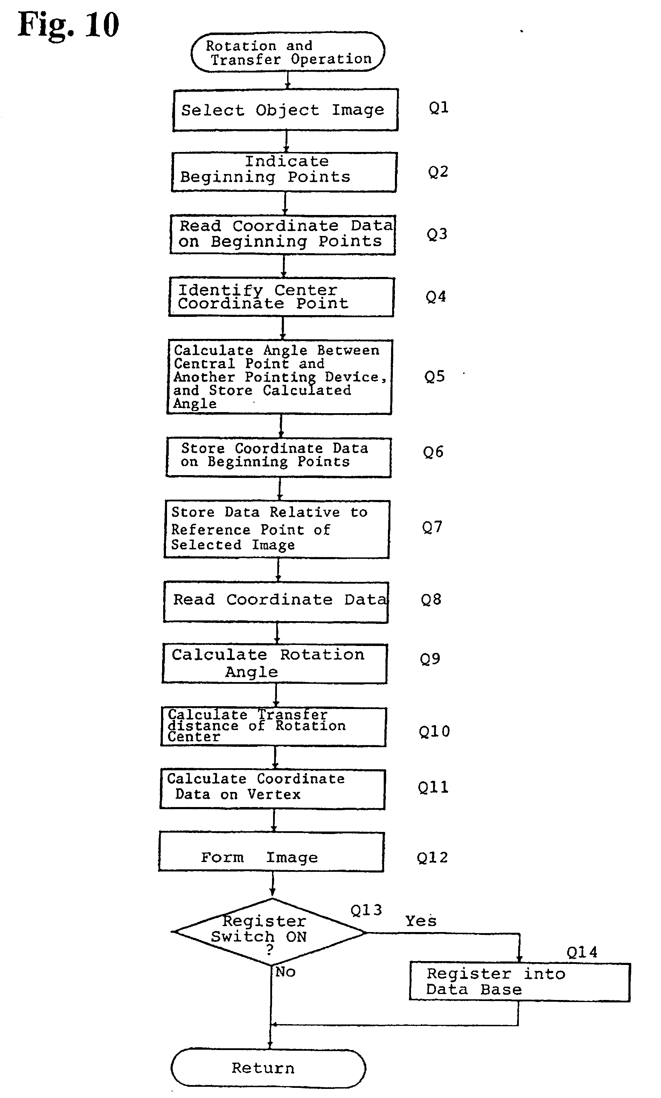

The rotation and transfer, scaling, and transformation operations will be described in detail with reference to Fig. 10 to Fig. 17.

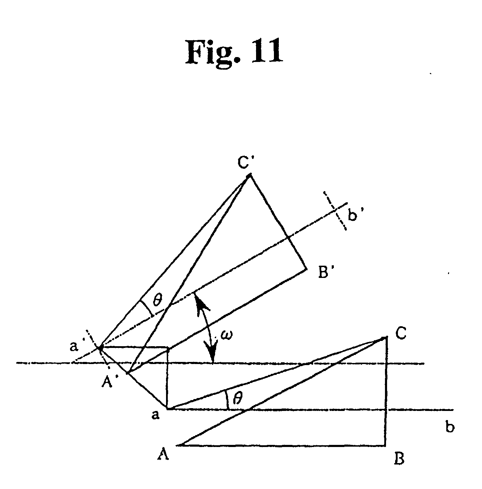

Referring to Fig. 10 and Fig. 11, a typical example of the rotation and transfer operation using two coordinate points (point "a", point "b") will be described.

In this embodiment, the rotation and transfer operation of an image is executed in accordance with some factors. That is, these factors are based on the relative relation between the object image defined by the coordinate point a (x, y) as a beginning point and the coordinate point b (X, Y), and the destination of the object image defined by the coordinate point a' (x', Y') and the coordinate point b' (X', Y'). These factors are, for example, angle for rotation, transfer vector of the beginning point a.

Fig. 10 is a flowchart showing a rotation and transfer operation for an object image, and Fig. 11 is a schematic illustration for explaining this rotation and transfer operation shown in Fig. 10.

At step Q1, an object image to be rotated and transferred is selected. In this example, as shown in Fig. 11, the object image is the triangle ABC. Then at step Q2, beginning points for rotation and transfer operation are indicated. At step Q3,coordinate data on the beginning points are read. Then, at step Q4, coordinate data on a central point for rotation and transfer operation is identified. At step Q5, the angle defined between the central point and another pointing device is calculated and stored.Furthermore, at step Q6, coordinate data on the beginning points (point a, point b) are also stored. At step Q7, relative coordinate data such as angle and distance between the central point (point "a" in this embodiment) for rotation and transfer operation and vertexes of the object image to be processed ( or coordinate point as reference such as central point for circle) are stored as information data relative to scaling points of the object image. At step Q8, coordinate data on two pointing devices is read. At step Q9, rotation angle is calculated by the beginning points (point a, point b) and the destination points (point a', point b'). In this embodiment, the angle is represented by ω as shown in Fig. 11. At step Q10, transfer distance of rotation center is also calculated. At step Q11, coordinate data on each vertex of the object image is calculated in accordance with the coordinate data on the destination point (a'). At step Q12, an image is formed at the required destination. Furthermore, a register switch is checked, whether it is ON or not at step Q13. When answer is Yes, the program progresses to step Q14 where the data on the reproduced image is registered in data base and then the program returns to the main process. On the other hand, when answer is No, the registerating operation is cancelled and this rotation and transfer operation is returned to the main process of the image processing device. This rotation and transfer operation is free from the distance between the two points indicated by the two pointing devices.

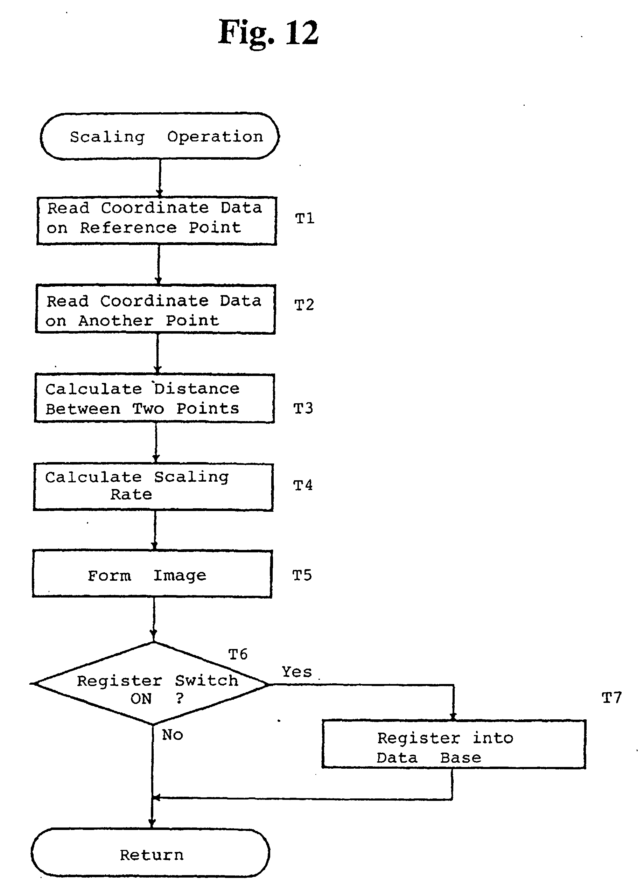

Referring to Fig. 12 to Fig. 14, a typical example of scaling operation in accordance with two coordinate points (point A, point B) will be described in detail.

The scaling operation according to the present invention is performed in accordance with various factors such as a reference point (for example, central point O for circle), distance between coordinate points A (x, y) and B(X, Y), distance between destination coordinate points A' (x', y') and B' (X', Y'), and ratio between these distances.

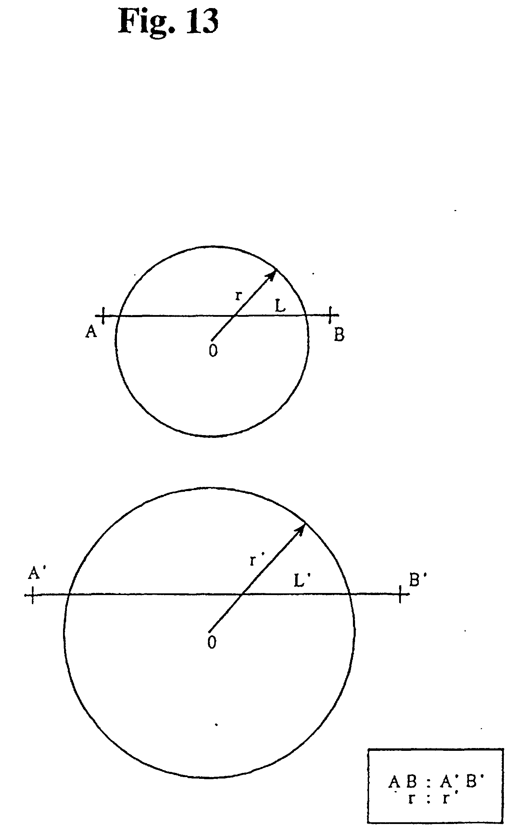

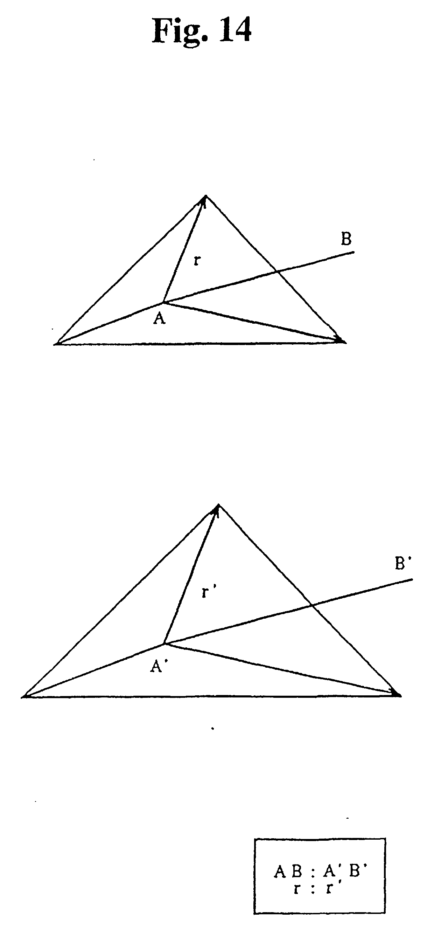

Fig. 12 is a flowchart showing an typical scaling operation. Fig. 13 and Fig. 14 are schematic illustrations showing graphic examples for explaining this scaling operation.

First, coordinate data on reference point(s) such as a central point O for a circle as shown in Fig. 13 and points A and B indicated by two pointing devices for a triangle as shown in Fig. 14 are read at step T1. Furthermore, at step T2, coordinate data on another point (the point B) is read. The read data, and the distance between the two points (A and B) are stored. At step T3, coordinate data on new points A' and B' are read and the distance between these two points is calculated. Then at step T4, scaling rate is calculated in accordance with the ratio between the stored reference distance A-B and the distance A'-B'. At step T5, the image processing device 12 forms an image depending on the calculated scaling rate.

As shown in Fig. 13, the ratio between distance AB and A'B' = ratio between length L and length L' is applied to the ratio between radius r and radius r' so that radius r' can be calculated from the equation: r' = r×(L'/L). Thus a circle with radius r' is formed about the central point O.

As shown in Fig. 14, the ratio between distance AB and A'B' is applied to the ratio between length r and length r' so that length r' can be calculated from the equation: r' = r×(A'B'/AB). Thus a triangle where one vertex is located at the point part r' from the reference point A is newly formed.

At step T6, a register switch is checked whether it is ON or not. When the answer is Yes, the program progresses to step T7 where the data on the reproduced image is registered in data base and then the program returns to the main process. On the other hand, when the answer is No, the registerating operation is cancelled and this scaling operation is returned to the main process of the image processing device.

In order to execute the rotation and transfer operation with scaling, the above described rotation and transfer operation and this scaling operation will be performed on the same occasion. For example, change in the distance between the central point for rotation and transfer and another point may be used for the scaling rate.

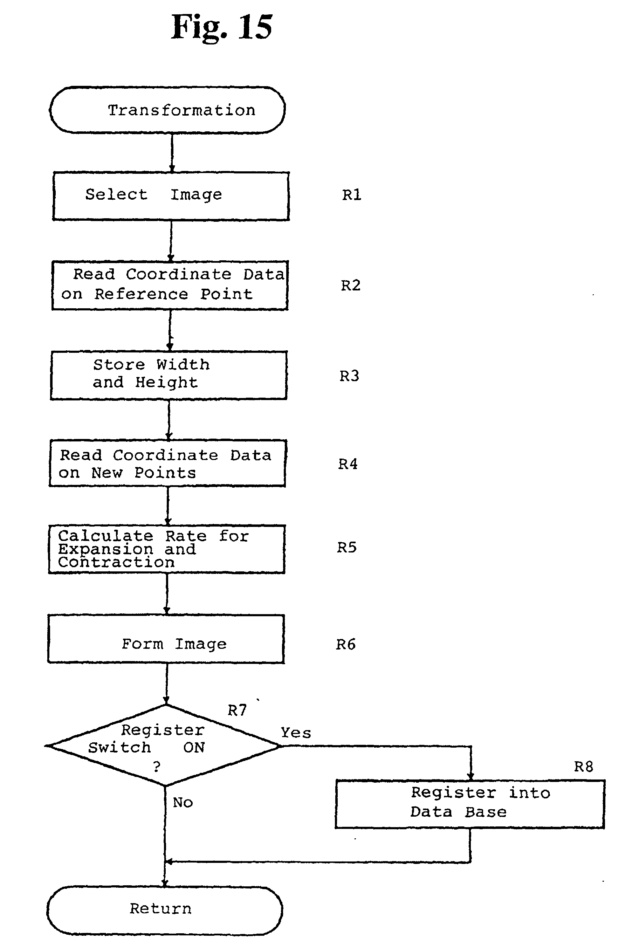

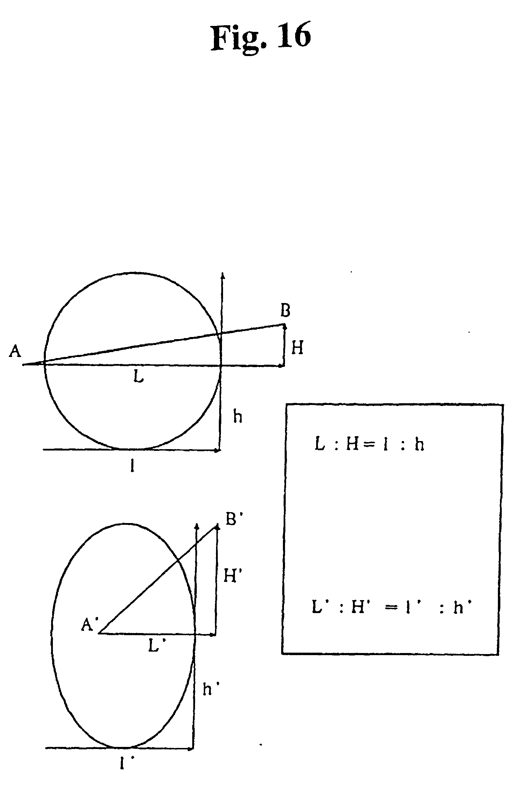

Referring to Fig. 15 and Fig. 16, a typical example of transformation operation in accordance with two coordinate points (point A, point B) will be described in detail.

The transformation operation according to the present invention is a modification of the above described scaling operation. Specifically, although the scaling operation is performed in accordance with reference values such as the distance between coordinate points A (x, y) and B(X, Y), and the distance between destination coordinate points A' (x', y') and B' (X', Y'), this transformation operation is performed in accordance with reference values in polar coordinates.

Fig. 15 is a flowchart showing an typical transformation operation. Fig. 16 is schematic illustrations showing graphic examples for explaining this transformation operation.

First, an object image to be transformed is selected at step R1. Next, at step R2, reference points A and B are indicated by two pointing devices and the coordinate data on the reference points A and B are read. As shown in Fig. 16, distance between the reference points A and B is defined by width L in X-coordinates and height H in Y-coordinates, these width L and height H are read at step R3. Furthermore, at step R4, coordinate data on new points A' and B' are read. At step R5, width L' and height H' are calculated from the line A' to B', and rate for expansion and contraction of the object image is calculated from the ratio between L:H and L':H'. At step R6, a new image is formed in response to the calculated rate.

At step R7, a register switch is checked whether it is ON. When the answer is Yes, the program progresses to step R8 where the data on the reproduced image is registered in data base and then the program returns to the main process. On the other hand, when the answer is No, the registerating operation is cancelled and this scaling operation is returned to the main process of the image processing device.

As is disclosed above, in the embodiment of the present invention, a plurality of points indicated by multiple pointing devices 11a, 11b are detected as independent coordinate information with identifying information of the pointing devices 11a, 11b by the tablet 10. An object image to be processed is graphically processed by the image processing device 12 in accordance with the identifying information and coordinate information on the pointing devices 11a, 11b. For example, processing instructions for the object image can be input by changing a first point as starting point and a second point as finishing point on the same occasion. This means that the present invention can provide simultaneous and parallel operation rather than conventional step by step sequential operation. This can enhance efficiency of input operation.

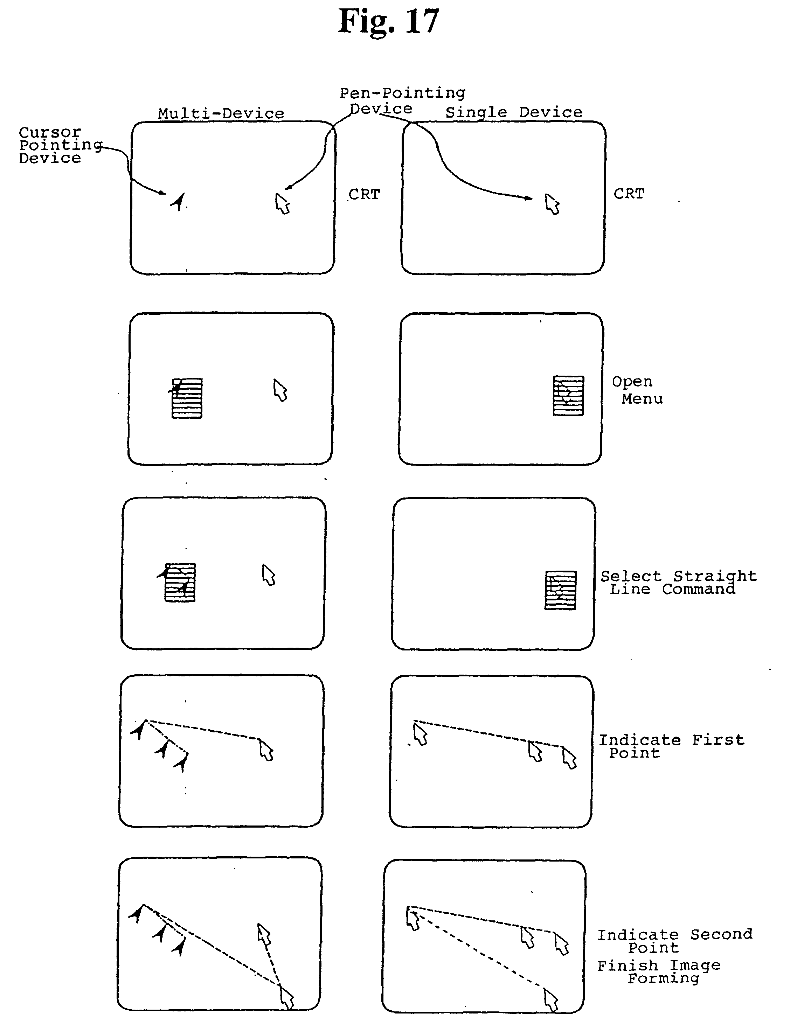

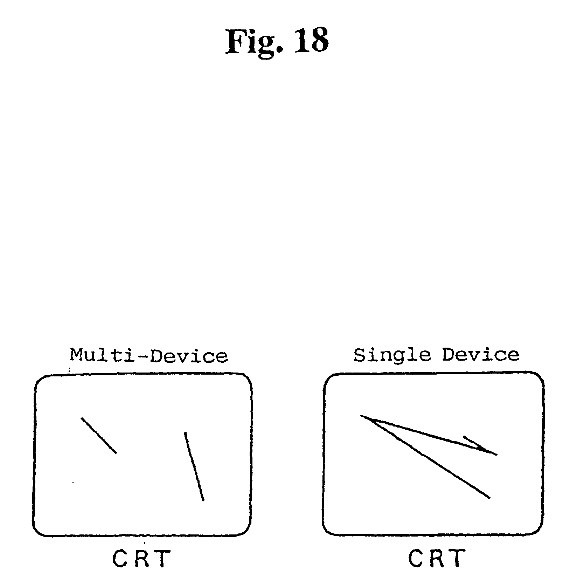

Since the processing system according to the present invention can perform multiple input operations on the same occasion, Fig. 18 shows the clear difference between the locus of movement of multiple pointing devices and that of a single pointing device by execution of command; that is, total moved distance of the pointing devices in this invention is 50% to 90% less than conventional system for the same command execution. Fig. 17 shows both systems require the same operation steps.

Furthermore, conventional rotation and transfer processing system requires; ① selection of an object image, ② setting a central point for rotation, ③ starting the rotation operation, ④ determining the angle for rotation, ⑤ selection of the transfer operation, ⑥ starting the selected transfer operation, and ⑦ finishing the transfer operation.On the other hand, embodied rotation and transfer processing system requires; ① selection of an object image, ② setting a central point for rotation, ③ starting the rotation and transfer operation, and ④ determining the angle for rotation and finishing the transfer operation. Therefore, the system according to the present invention can reduce operation steps. In other words, the graphic processing apparatus according to the present invention allows the operator to operate in an extremely natural and logical manner sounds very strange, logical means the same thing is more usual without troublesome and confused operation.

As many apparently widely different embodiments of this invention may be made without departing from the spirit and scope thereof, it is to be understood that the invention is not limited to the specific embodiments thereof except as defined in the appended claims.

For example, this embodiment uses two types of electromagnetic waves having different frequency to identify between the pen type pointing device 11a and the button cursor type pointing device 11b. The present invention is not limited to this, another identifying method empolying identification codes belonging to respective devices may also be used.

The pointing devices on the tablet 10 are not limited to the pen type pointing device 11a and the button cursor type pointing device 11b, and the number of switches arranged on the pointing devices is not limited to a or any specific number.

Furthermore, the data format input from the pointing devices is not limited to Table 1. The CRT display device 13 may also be replaced by liquid crystal display (LCD) or projector type display device.

## Claims

1. Graphic data processing apparatus (1) comprising a plurality of pointing devices (11a, 11b) and a display means;
an input unit (2) including a two dimensional input area (2a) on X, Y plane for inputting coordinate data;
wherein each of said pointing devices (11a, 11b) indicates a specific point on the input area (2a);
an indicated point detecting circuit (22) for detecting the point indicated by the pointing device (11a, 11b) as a coordinate data;
a pointing device discriminating circuit (23) for discriminating the coordinate data from the indicated point detecting circuit (22) belonging to the pointing devices (11a, 11b) adding a discriminating data to the coordinate data and transmitting the coordinate data with the discriminating data to an image processing device (12);
an image forming means (5) for forming an image in response to the coordinate data with the discriminated data transmitted from the pointing device discriminating circuit (23); **characterized by**
an image processing means (6) for selecting one of
- translating operation,
- rotation and transfer operation,
- scaling operation,
- scaling and transformation operation
to be processed to an object image in accordance with identifying information and coordinate information of the pointing devices (11a, 11b) and executing the selected operation based on a relative relation between the object image defined by first coordinate points (a(x,y), b(x,y)) and a destination of the object image defined by second coordinate points (a'(x,y),b'(x,y)), said display means for displaying the image formed by the image forming means (5) and the image processing means (6).

2. Graphic data processing apparatus (1) according to claim 1, wherein the above described image processing means (6) selects, a central point for rotation as one of the points indicated by the pointing devices (11a, 11b) and preferably executes rotation and transfer operation of the image to be processed in accordance with the angle defined between the selected central point and the other indicated points.

3. Graphic data processing apparatus (1) according to claim 1, wherein the above described image processing means (6) selects, as a central point one of the points indicated by the pointing devices (11a, 11b) and preferably executes scaling operation of the image to be processed in accordance with the distance defined between the selected central point and the other indicated points.

4. Graphic data processing method comprising a step for inputting coordinate data representing a plurality of points indicated by a plurality of pointing devices (11a, 11b) into an input unit (2) including a two dimensional input area (2a) on X, Y plane and
a step for detecting the input coordinate data and identification data which are unique for the pointing devices (11a, 11b) through which the coordinate data were inputted; **characterized by**
a step for executing image processing such as translating, rotation and transfer, scaling or scaling and transformation to a previously formed image based on a relative relation between an object image to be processed which is defined by first coordinate points (a(x,y),b(x,y)) and a destination of the object image defined by second coordinate points (a'(x,y), b'(x,y)).

## Patentansprüche

1. Grafikdatenverarbeitungsvorrichtung (1), umfassend eine Mehrzahl von Zeigevorrichtungen (11a, 11b) und ein Darstellungsmittel,
eine Eingabeeinheit (2), die einen zweidimensionalen Eingabebereich (2a) auf einer X,Y-Ebene zur Eingabe von Koordinatendaten beinhaltet,
wobei jede der Zeigevorrichtungen (11a, 11b) einen spezifischen Punkt auf dem Eingabebereich (2a) anzeigt,
einen Anzeigepunktermittlungsschaltkreis (22) zur Ermittlung des durch die Zeigevorrichtung (11a, 11b) angezeigten Punktes als Koordinatendaten, einen Zeigevorrichtungsunterscheidungsschaltkreis (23) zur Unterscheidung der Koordinatendaten von dem Anzeigepunktermittlungsschaltkreis (22), gehörend zu den Zeigevorrichtungen (11a, 11b) addierend Unterscheidungsdaten zu den Koordinatendaten und sendend die Koordinatendaten mit den Unterscheidungsdaten an eine Bildverarbeitungsvorrichtung (12),
ein Bildgestaltungsmittel (5) zur Gestaltung eines Bildes in Antwort auf die Koordinatendaten mit den unterschiedenen Daten, die von dem Zeigevorrichtungsunterscheidungsschaltkreis (23) gesendet werden, **gekennzeichnet durch** ein Bildverarbeitungsmittel (6) zur Auswahl einer aus einer
- Translatierungsoperation,
- Rotations- und Transferoperation,
- Skalierungsoperation,
- Skalierungs- und Transformationsoperation,
mit der ein Objektbild in Übereinstimmung mit Identifizierungsinformation und Koordinateninformation der Zeigevorrichtungen (11a, 11b) zu bearbeiten ist, und zur Ausführung der gewählten Operation, basierend auf einer relativen Relation zwischen dem Objektbild, das **durch** erste Koordinatenpunkte (a(x,y), b(x,y)) definiert ist, und einer Bestimmung des Objektbildes, die **durch** zweite Koordinatenpunkte (a'(x,y), b'(x,y)) definiert ist, wobei das Darstellungsmittel zur Darstellung des **durch** das Bildgestaltungsmittel (5) und das Bildverarbeitungsmittel (6) gestalteten Bildes dient.

2. Grafikdatenverarbeitungsvorrichtung (1) gemäß Anspruch 1, wobei das oben beschriebene Bildverarbeitungsmittel (6) einen zentralen Punkt für eine Rotation als einen der durch die Zeigevorrichtungen (11a, 11b) angezeigten Punkte wählt und vorzugsweise eine Rotations- und Transferoperation des zu verarbeitenden Bildes ausführt in Übereinstimmung mit dem Winkel, der zwischen dem gewähltem zentralen Punkt und den anderen angezeigten Punkten definiert ist.

3. Grafikdatenverarbeitungsvorrichtung (1) gemäß Anspruch 1, wobei das oben beschriebene Bildverarbeitungsmittel (6) als einen zentralen Punkt einen der durch die Zeigevorrichtungen (11a, 11b) angezeigten Punkte wählt und vorzugsweise eine Skalierungsoperation des zu bearbeitenden Bildes ausführt in Übereinstimmung mit dem Abstand, der zwischen dem gewählten zentralen Punkt und den anderen angezeigten Punkten definiert ist.

4. Grafikdatenverarbeitungsverfahren, umfassend einen Schritt zur Eingabe von Koordinatendaten, die eine Mehrzahl von Punkten, die durch eine Mehrzahl von Zeigevorrichtungen (11a, 11b) angezeigt werden, repräsentieren, in eine Eingabeeinheit (2), die einen zweidimensionalen Eingabebereich (2a) auf einer X,Y-Ebene beinhaltet, und
einen Schritt zur Ermittlung der Eingabekoordinatendaten und Identifikationsdaten, welche einheitlich für die Zeigevorrichtungen (11a, 11b), durch welche die Koordinatendaten eingegeben wurden, sind, **gekennzeichnet durch**
einen Schritt zur Ausführung einer Bildverarbeitung, wie einer Translatierung, Rotation und Transfer, Skalierung oder Skalierung und Transformation, auf ein vorher gestaltetes Bild, basierend auf einer relativen Relation zwischen einem zu bearbeitenden Objektbild, welches **durch** erste Koordinatenpunkte (a(x,y), b(x,y)) definiert ist, und einer Bestimmung des Objektbildes, die **durch** zweite Koordinatenpunkte (a'(x,y), b'(x,y)) definiert ist.

## Revendications

1. Appareil de traitement de données graphiques (1) comprenant une pluralité de dispositifs de pointage (11a, 11b) et des moyens d'affichage ;
une unité d'entrée (2) comprenant une zone bidimensionnelle d'entrée (2a) sur une plan X, Y pour l'entrée de données de coordonnée ;
dans lequel chacun desdits dispositifs de pointage (11a, 11b) indique un point spécifique sur la zone d'entrée (2a) ;
un circuit de détection du point indiqué (22) pour détecter le point indiqué par le dispositif de pointage (11a, 11b) sous forme de données de coordonnées ;
un circuit de discrimination (23) de dispositif de pointage pour discriminer les données de coordonnées originaires du circuit (22) de détection de point indiqué appartenant aux dispositifs de pointage (11a, 11b) en ajoutant une donnée de discrimination aux données de coordonnée et pour transmettre les données de coordonnée accompagnées des données de discrimination vers un dispositif de traitement d'image (12) :
des moyens de formation d'image (5) pour former une image en réponse aux données de coordonnée accompagnés des données de discrimination transmises à partir du circuit de discrimination (23) du dispositif de pointage (22) ; **caractérisé par** des moyens de traitement d'image (6) pour sélectionner l'une parmi :
- une opération de translation,
- une opération de rotation et de transfert,
- une opération de mise à l'échelle
- une opération de mise à l'échelle et de transformation,
à effectuer sur une image objet en correspondance à des informations d'identification et des informations de coordonnée des dispositifs de pointage (11a, 11b) et pour exécuter l'opération choisie sur la base d'une relation relative entre l'image objet définie par les premiers points de coordonnée (a(x,y), b(x,y)) et une destination de l'image objet, définie par des deuxièmes points de coordonnée (a'(x,y), b'(x,y)), lesdits moyens d'affichage pour afficher l'image formée par les moyens de formation d'image (5) et les moyens de traitement d'image (6).

2. Appareil de traitement de donnée graphique (1) selon la revendication 1, dans lequel lesdits moyens de traitement d'image (6) décrits ci-dessus sélectionnent un point central pour la rotation en tant que l'un des points indiqués par les dispositifs de pointage (11a, 11b) et, de préférence, exécutent l'opération de rotation et de transfert de l'image à traiter, en correspondance à l'angle défini entre le point central sélectionné et les autres points indiqués.

3. Appareil de traitement de données graphiques (1) selon la revendication 1 dans lequel lesdits moyens (6) ci-dessus décrits de traitement d'image sélectionnent, en tant que point central, l'un des points indiqués par les dispositifs de pointage (11a, 11b) et de préférence exécutent l'opération de mise à l'échelle de l'image à traiter en correspondance à la distance définie entre le point central sélectionné et les autres points indiqués.

4. Procédé de traitement de données graphiques comprenant une étape consistant à fournir en entrée des données de coordonnée représentant une pluralité de points indiqués par une pluralité de dispositif de pointage (11a, 11b) dans une unité d'entrée (2) comprenant une zone bidimensionnelle (2a) sur un plan X, Y et
une étape de détection des données de coordonnée d'entrée et des données d'identification qui sont uniques pour les dispositifs de pointage (11a, 11b) au moyen desquels lesdites données de coordonnées ont été fournies en entrée ;
**caractérisé par**
une étape d'exécution d'un traitement d'image tel qu'une translation, une rotation et un transfert, une mise à l'échelle ou une mise à l'échelle et une transformation vers une image formée précédemment sur la base d'une relation relative entre une image d'objet à traiter qui est définie par des premiers points de coordonnée (a(x, y), b(x,y)) et une destination de l'image objet définie par des deuxièmes points de coordonnée (a'(x,y), b'(x,y)).
